# EUROPEAN PATENT SPECIFICATION

(11) **EP 3 379 210 B1**
(45) Date of publication and mention of the grant of the patent: **08.07.2020**
(21) Application number: 18162528.6
(22) Date of filing: 19.03.2018
(51) Int. Cl.: G01F 19/00, G01F 25/00, A47G 19/22

(54) **METHOD AND DEVICE FOR MARKING THE VOLUME LINE OF A VESSEL, MAINLY A GLASS**
VERFAHREN UND VORRICHTUNG ZUR MARKIERUNG DER VOLUMENLINIE EINES GEFÄSSES, INSBESONDERE EINES GLASES
PROCÉDÉ ET DISPOSITIF DE MARQUAGE DE LA LIGNE DE VOLUME D'UN RÉCIPIENT, PRINCIPALEMENT UN VERRE

(30) Priority: 19.03.2017 SK 500202017
(43) Date of publication of application: 26.09.2018
(73) Proprietor: RONA, a.s., 020 61 Lednicke Rovne (SK)
(72) Inventor: CARDA, Ján, 921 01 Pie any (SK)
(74) Representative: Porubcan, Róbert

(56) References cited:
- DE-B- 1 253 471
- GB-A- 1 359 161
- GB-A- 1 516 424
- GB-A- 2 452 764

## Description

### Field of technology

The invention concerns a method and device for exact placement and production of a volume line, that is, material volume line marking the level with the marked volume of the vessel, mainly a glass. The method conforms to metrological standards and takes the real shape of the vessel into account; volume line hereby produced is verified gage of a vessel.

### Prior state of the art

Vessels have their volume marked by a volume line or multiple volume lines determining the level of the liquid in the vessel for the given volume. The term "volume line" in this text means any visible mark, line or jut; usually it will be a short horizontal line.

In cases of vessels produced in series, which use forms defining the inner shape of the vessel, the volume line is commonly produced already in the form. During the production of glass products such as bottles or glasses the marking of the volume line is usually realized only subsequently, since despite the machine mass production there are various dimensional deviations. It is a common approach when some glasses are picked from a group of glasses, they are then filled with a respective amount of liquid, the liquid level is measured, the mean of this level is calculated, and then the volume line is produced in calculated height. This leads to relatively high inaccuracies (often more than ±5%, in extreme cases more than ±10%), since the exact shape of the glass can vary considerably even within a single group of the production charge, mainly in production by mold-blowing and during production of bowls with pulled stem.

The inaccuracy of the marked volume line is considered to be a problem when the volume line is used as invoicing measure, which is common situation in restaurants, bars and similar operations, where drinks - mainly alcoholic drinks - are distributed. Such measured liquids are relatively expensive and thus the inaccuracies can have tax effects, too. It is thus required to increase the precision of measuring of the bar vessels for drinking (cups, glasses, cups with ear, shots, and so on), the marking of the volume measure should be repeatedly exact and productive in such a way that it corresponds to the speed of the mass production of the vessels.

Document GB 1516424 A explains an apparatus for the automatic calibration of vessels, where is a feature to appoint the level height mechanically connected with the level-marking device. Positioning of the level-marking device is done after the dispensing liquid stabilization.

Publication GB 1359161 A describes a calibration of scientific glass wear into which measured quantities of liquid are dispensed. The apparatus includes a liquid level detection system comprising an infra-red radiation source. The apparatus is designed for the calibration of an individual vessel after the liquid level stabilization.

Solution according to DE 1253471 B uses a working plate moving vertically on which a vessel is placed. Vessel is moved up until the level of the liquid touches an electrode. Vertical movement causes instability of the level of the liquid and the waiting time for the stabilization prolongs the process.

A contactless method of scanning of the surfaces is known; thanks to this method it is possible to determine the shape and calculate the volume of the vessel; such scanning is, however, relatively slow and it is still a volume measure which is calculated on the basis of theoretical model with risky inaccuracies. A metrologically acceptable method of marking of the volume line is desired and not known, which will have minimal costs on human operation and which will operate reliably even in cases of glass vessels.

### Essence of the invention

The invention is described in the claims 1 to 15. The abovementioned deficiencies are significantly remedied by the method of marking of the volume line of the vessel, particularly a glass, in case of which on the transparent and/or translucent wall of the vessel a line defining the level of the respective marked volume of the liquid in the vessel is produced from the outer side, whereby the line is visible to a naked eye, according to this invention, the essence of which lies in the fact that the liquid with a volume corresponding to the marked volume is poured into the vessel, the height of the level of the liquid in the vessel is measured contactlessly, wherein during measuring of the height of the level of the liquid in the vessel, values of a changing distance of the unstable level of the liquid are measured and from the fluctuating value of the measured distance from the liquid the distance of the level that would be after stabilization is calculated; pursuant to the measured height the element for production of the lines (lines production element) on the outer wall of the vessel is vertically positioned and after achieving respective vertical position of the element the line is produced. Subsequently, the liquid is poured out of the vessel.

From the point of view of achieving high productivity it is preferable if the vessel gradually enters into three main positions in which the filling, measuring of the height of the level, and production of the line, takes place. The transition between the three positions will be ensured by relative movement of the vessel and the filling element, level measuring instrument, and element for production of the lines. Such relative movement can be ensured in such a way that the vessel is in stable position and the filling element, level measuring instrument and lines production element are gradually moved towards it or - in preferable arrangement - the relative movement is opposite; that means, the vessel moves to the position to the fixedly placed elements and measuring instrument. Combined movement is not ruled out either, but a solution proved to be reliable where the vessels are placed on the rotational table and alongside the circumference of the table there is, subsequently, filling element, level measuring instrument and lines production element. These elements and measuring instrument are placed in the identical angular pitch as the vessels on the rotational table are placed. By the movement and stopping of the table the vessels get into the desired position to the individual elements and measuring instrument.

The basic advantage of the described method of the marking of the volume line of the vessel lies in the fact that the position of the line is individual pursuant to the actual and exact volume of the poured liquid, which eliminates any shape deviation resulting from the inner shape of the vessel. Each vessel is measured and gauged individually and actual shape and resulting volume of the vessel is taken into account.

One of the known methods of measuring of the volume can be used to measure the amount of liquid poured into the vessel, for example by means of weighing or measuring of flow. A method has been proved quick and efficient during inventing, where the time of flow of the liquid during constant pressure is used for measuring of volume. The constant pressure is achieved as a hydrostatic pressure with a stable level of the liquid, which is easily and reliably achievable by means of a vessel with a firm height of the column of the liquid. In such case the vessel is filled during its first stop by a liquid for an exactly defined time, which is possible to set and repeatedly ensure with a precision up to a single ten-thousandth of second. The stable characteristics of the relevant physical values of the liquid, especially its density, is maintained. The temperature of the inflowing liquid is monitored and stabilized in order to achieve this goal, for example by the fact that the process of filling is set to a temperature slightly higher than the environment temperature, and it is heated to this temperature by means of an electric resistance body. A method is also possible where the actual temperature of the liquid is taken into account during the adjustment of the time of the outflow on the basis of known dependence of the density of the liquid and its temperature.

Before the filling of the vessel with the liquid a task can be defined in the process to verify the presence of the vessel in the position of filling by the liquid. This prevents the outpouring of the liquid into the environment in case that vessel, for any reason, does not reach the correct position - when it is broken and so on. The steps encompassing measuring and production of the line are left out, too.

After the filling the vessel is moved to the second position where the height of the level of the liquid in the vessel is measured. The level of the liquid just after the filling of the glass is unstable and the movement of the vessel into the second position creates dynamic changes on the liquid's level. It is thus preferable to measure the height of the liquid's level with a time lag, during which the level is at least partially stabilized. This time would, however, prolong each step and delay all partial tasks. A method has been invented which measures the height of the level as a dynamic value in time, that is, as fluctuating value from which the height of the stabilized level is calculated.

Three steps take place in the method according to this invention - filling, measuring and marking of the line. The time beat during the movement of the vessel will be defined by the slowest step, for example by marking of the line. All other main steps can be suitably adjusted to this beat so that these steps are set in such a way that they use the available time in a single beat. In case of the measuring of the level this can mean that the measuring will start by the end of the beat when the level is most stable; naturally, the measuring will end before the movement of the vessel into another position begins. During the measuring of the level we can proceed in such a way that the distance of the level from the reference height is measured, whereby the level measuring instrument has fixed height relation to this reference height. Subsequently, pursuant to this reference height and measured distance of the liquid, the lines production element is positioned.

The lines can be produced by any known method, for example by a print head which presses the paint to the wall of the vessel, or by means of a laser ray which is focused on the wall of the vessel and burns in the line, and so on. During the positioning of the element for the production of the lines the correction calculated retrospectively after the demarcation of short series of glasses can be taken into account aside from the height of the liquid's level. The correction is a task when the process of marking of the volume line starts; the vessels with the marked lines are taken out and the deviation of the marking is calculated by an independent method and preferably by independent person. The step of the independent - for example, metrologically accepted measuring can be repeated up until the desired precision is achieved.

Third step can include the marking of the number denoting the value of the given volume pursuant to the laws of a given territory. Pursuant to the legal rules the mark confirming the validity of the verified measuring instrument can be marked in another place, too, for example in case of glasses on the bottom, or on the glass' stem, respectively.

Since the vessels lack the simple cylindrical shape, and can be variously conically narrowed or broadened, the production of a straight line can be deformed by the fact that the element for the production of the lines, that is, for example, print head or optical head of the laser, have a stable angular position relative to the wall of the vessel. This leads to the deformation of the straight line to a curve, concavely or convexly deformed line. The deformation does not have to be visible in cases of short lines and larger volumes of the vessels, but it is desirable to remove this deformation. This can be achieved by mutual movement of the vessel during the marking of the line, or tilting of the lines production element, which however leads to technical problems. A solution proved to be preferable when a straight line is produced on the wall of the vessel in such a way that the lines production element at its outlet marks a prepared, deformed line, which, after the spatial relationship with the wall of the vessel is taken into account, ends as a straight line on the wall of the vessel. The intentional counter-deformation of the vessel programmed for a lines production element eliminates the spatial deformation during marking. The deformation will be calculated mainly on the basis of the cross-section of the cylindrical wall of the vessel and a slope of the wall in the place of the marking of the line. The instruction to produce a deformed line, that is, deformed line from the point of view of the outlet of the lines production element, is programmed in such a way that the resulting line on the wall of the vessel is straight.

Aside from the tree main steps (filling, measuring of the height, marking of the line) the method includes auxiliary steps. At the beginning it is necessary to place the vessel into right position. If the vessel moves between the positions by means of a rotational table, the vessel must be put to right position on the table in such a way that it is possible to determine where the vessel is in each step even without further recognition of the position. During the placement of the vessel to the starting position it is preferable if it is placed into the position suitable for the measurement of the liquid's level and production of the line. The pouring of the liquid does not require as precise positioning of the vessel against a nozzle with the outpouring liquid as requires the production of the line; for example in case of laser burning the exact focusing of the laser bundle on the wall of the vessel is crucial. It is therefore preferable if the vessels are placed into the precise position before they are filled with liquid. In case the rotational table is used the individual positions for the vessels can be produced as embedded in the plane of the rotational table.

After the production of the line or, eventually, after the marking of the value of the volume and the gauge mark (calibration mark, graduation mark), too, the liquid is poured out of the vessel; preferably the liquid is repeatedly used during the filling of other glass. It is preferable to dry the inside of the vessel, whereby, for example, the flow of pressed air can be used, which pushes the drops of the liquid out of the vessel's inside. This prevents the appearance of stains on the surface of the vessel; stains are not serious technical problem, but in case of glass vessels, mainly glass for drinking, there are aesthetic issues, too.

A robotized manipulator can be used for insertion of the vessels into a set position and taking out of the vessels after the process finishes, but even in case of manual operation a high productivity is achieved; the productivity is several times higher than in cases of hitherto known methods of production of material volume lines.

The deficiencies in the prior state of the art are significantly remedied by the device for marking of the volume line of the vessel, particularly a glass, too, which comprises a support frame (carrier frame), an element for production of lines on the outer wall of the vessel, whereby the lines production element is height adjustably placed on the support frame and the device also involves a positioning tool (or positioning element) for a mutual horizontal movement between the vessel and the lines production element according to this invention, the essence of which lies in the fact that the device has an element for the filling of the vessel with a liquid, whereby this element is equipped by the device for dosing of the volume of the liquid suitable for a given marked volume line and it also involves a contactless measuring instrument for measuring of the level of the liquid, whereby the outlet of the measuring instrument is connected with the height adjustment of the lines production element. The individual elements within the device are arranged in the following order: element for filling with the liquid, instrument for measuring of the liquid's level, lines production element. The positioning element serves for the relative movement of the vessel between this element; this positioning element can ensure the movement of the elements while the vessel is fixed or movement of the vessel while the elements are fixedly positioned. The device for marking of a volume line of a vessel is configured to carry out the aforementioned method according to the present invention.

An arrangement with positioning of the vessel into individual positions is preferable. Such positioning device can be a rotational table where it is possible to easily and reliable ensure the precision of the height position of the vessel in all positions. The places for placement of the vessel are marked on the rotational table; it is preferable if these places have shape embedding or protrusion which helps the correct insertion of the vessel. The angular pitch of the places for insertion of the vessel corresponds to the angular pitch between the filling element, measuring instrument and lines production element. The rotational table rotates with a preset temporal beat for a value of the angular pitch; by this the vessel gradually enters into each of the three main positions, whereby the vessel is still in the same height relative to the support frame of the device. It is important that after the measuring of the height of the liquid's level the vessel moves into the position for production of the line without unexpected change in the height. The lines production element is vertically set pursuant to the height of the level of the liquid.

In another arrangement the positioning element can have a different character; it can be a conveyor, or the auxiliary trolley which carries the measuring instrument and lines production element can move around the standing line of vessels.

Since most of the known elements to mark the lines require the maintenance of the preset distance from the surface of the wall of the vessel it is preferable if the device has a tool for exact positioning of the vessel. For example, the device can have a stop onto which the wall of the vessel leans during the insertion of the vessel; preferably it has a stop in the expected place of the production of the line. From this position the vessel moves to the first main position, that is, towards the element for filling with the liquid, whereby it maintains its position within the positioning tool in order to keep the necessary distance from the lines production element, for example from a laser head.

As we have mentioned in the description of method, the measuring of the volume of the liquid can be based on various known physical methods. As quick and efficient has proved a solution where the filling element has a valve for opening and closing of the flow of the liquid heading into the outlet nozzle. The valve is electronically controlled in such a way that it is opened during the exactly set period during which exactly the required volume of the liquid flows. In order for the pressure of the liquid to be stable a storage vessel with a constant height of the liquid's level is used. This can be easily achieved in such a way that the storage vessel has an overflow pipeline whose upper end leads into the desired height of the vessel. The entry pipeline with an input of the liquid also leads to the vessel, whereby a higher amount of liquid that is consumed by the device is led into the vessel. This achieves a state where the superfluous liquid runs through the overflow pipeline to the collection vessel, from which it is pressed back into the storage vessel by a pump. Preferably, a liquid poured out of the vessels, which went through the cycle of marking, enters the collection vessel, too.

The liquid can be modified water, mainly demineralized water. The water can contain additives against biological degradation, for example against the growth of algae. Thanks to this the water can be used for a longer time in the cycle, even though it is exposed to environmental influences.

Preferably, an electronic timer is used in order to measure the time of opening of the outlet valve; the timer can be directly gauged to the volume of the liquid.

In order to maintain the constant temperature of the liquid which affects its density, the storage vessel has a temperature element, preferably a heating element which keeps the liquid at the reference temperature, whereby this temperature approaches the temperature of the environment. The reference temperature can be higher than the temperature of the environment and in order to achieve the reference temperature it suffices to heat the liquid with the feedback loop from the sensor of the liquid's temperature.

The instrument for measuring of the level of the liquid in the vessel has an output connected to the control center. The control center sends the instructions to move the positioning element; it sends the instructions to start the filling and to produce a line. The control center will receive a final value of the distance of the liquid's level from the reference height, a level fluctuating in time, from the measuring instrument, and on the basis of this value it calculates the final value of the distance of the liquid's level from the reference height. Pursuant to this datum the control center sends the instruction to height-position the lines production element. In the moment the vessel from the previous step is put into the position to produce lines, the control center sends instructions to produce lines and usually to write a numeral expression of the volume, too. At the same time the control center can send an instruction for the second element for labelling, which marks the gauge mark in a different place. The place of this marking does not have to be as exactly localized as in case of production of a material volume line.

If a laser tool is used as lines production element, the device will also include sight protective tools against direct or deflected laser beams. The protective element can have shifting shades which cover the vessel at the moment when the vessel is in a position to produce lines.

The liquid is poured out of the vessel by the end, preferably the liquid enters through the sink to the collection vessel where the liquid from the overflow pipeline goes, too. In the collection vessel the liquid is held in the volume with some reserve which suffices to cover the losses connected to the evaporation or pouring outside the vessel.

The outpouring of the liquid from the vessel can be manual or automatic, where the manipulator overturns the vessel in the zone above the sink. In the preferable arrangement the device also includes remover of the remnants of liquid; it can be a nozzle with pressed air which blows into the inside of the vessel. The drops of the liquid flow into the sink connected with the collection vessel.

The device is highly precise when marking the volume line; it is also highly productive with a minimal share of manual work; this share is only in acts which do not affect the metrological precision of the process. The manual work in form of insertion of the vessels into the device and taking the vessels out of the device, in case of turning the vessels over and outpouring of the liquid, can be substituted by a manipulator. It is important that manual work is not necessary in steps which require mental assessment of the process or skills. The device does not require too much space - it can be easily mounted by the production line which produces the vessels.

### Description of drawings

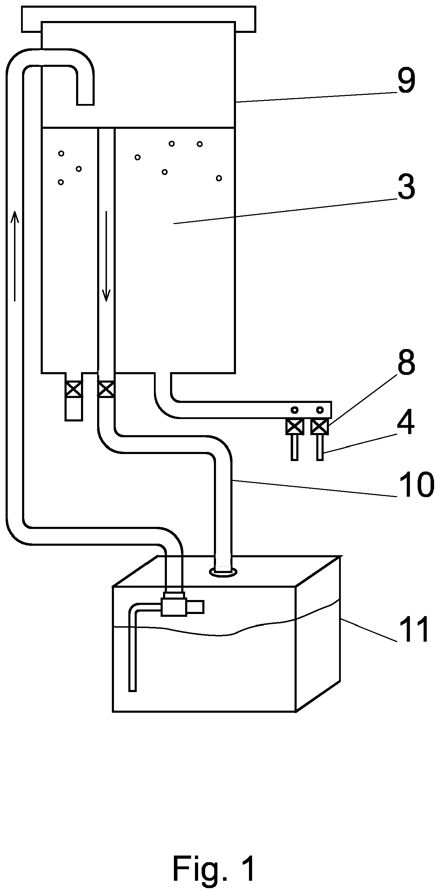

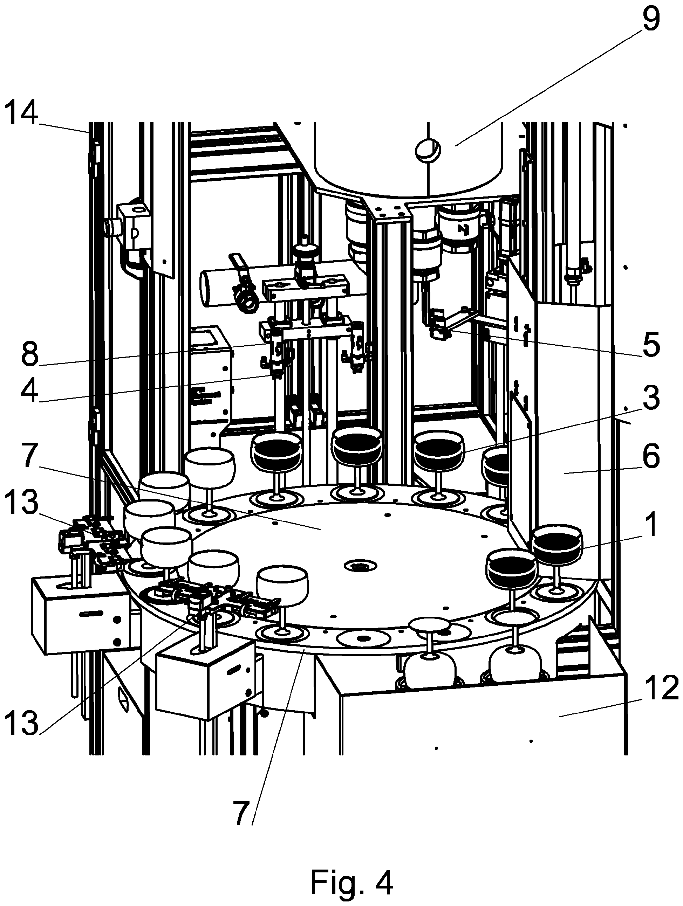

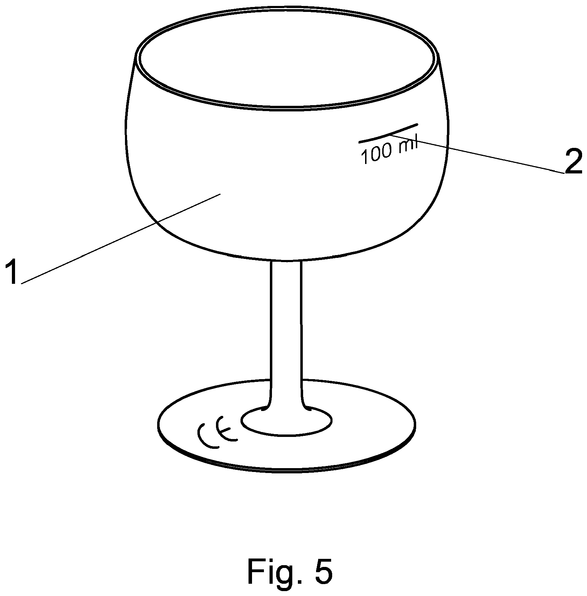

The invention is further disclosed by means of figures 1 to 5. The elements and devices are depicted schematically, the ratio of sizes is illustrative only and cannot be interpreted as limiting the scope of protection. The depiction of the particular vessel in form of a glass with a stem is illustrative only, too.
Figure 1 is a diagram of hydraulic connection of the filling element with two outlet nozzles.
Figure 2 is a spatial view of the device from the side with a control center.
Figure 3 is an axonometric view of the device from the side of the positioning tool, on which the glass with the stems is put. Two glasses are depicted in the position of outpouring of the liquid to the sink.
Figure 4 is a positioning tool in form of a rotational table in which there are embeddings for the placement of the cups. The black color depicts a liquid in the glasses; in the example it is colorless, though. The black color is used only to make the liquid visible in individual phases of the process.
Figure 5 depicts the example of the glass with the produced line and marked value of the volume of the glass. The certification mark is depicted on the glass' stem.

### Examples of realization

### Example 1

In this example according to figures 1 to 5 the device has a support frame 14 in form of a spatial construction from the aluminum profiles. The support frame 14 produces a space for attachment of individual parts and elements of the device.

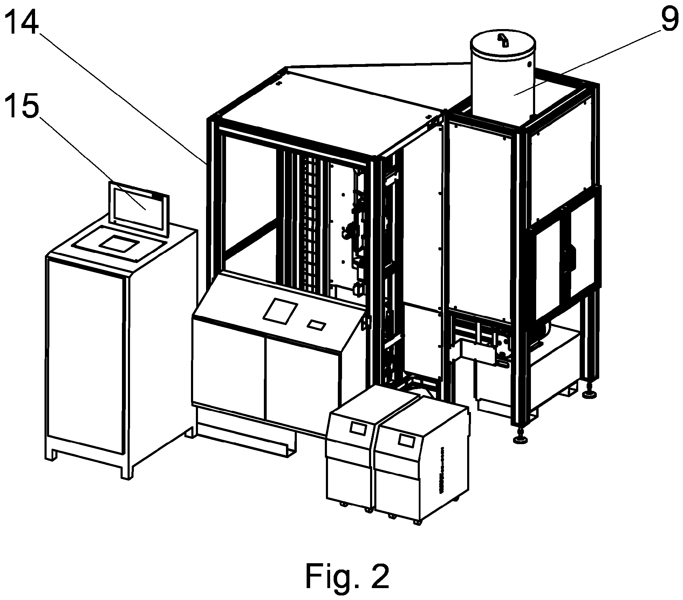

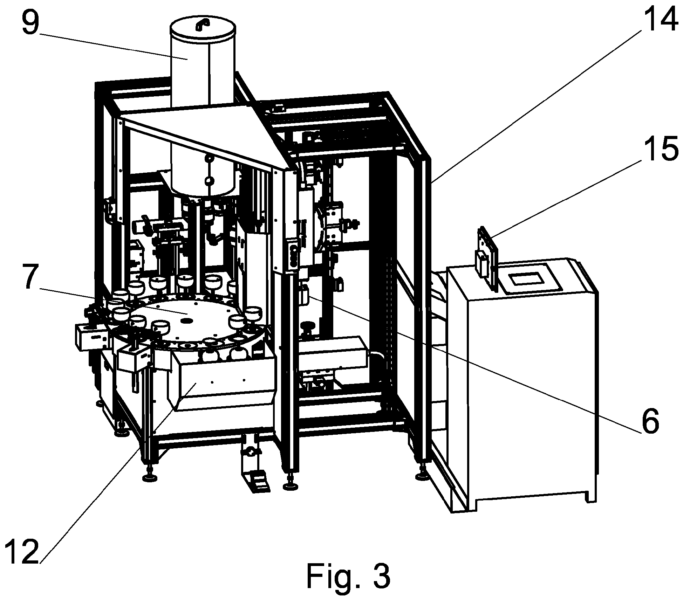

In figures 2 and 3 it can be seen that in this example of realization the cylindrical storage vessel 9 protrudes from the spatial support frame 14, in the vessel 9 the stable level of the liquid 3 is maintained by means of an overflow pipeline 10. The liquid 3 flows into the storage vessel 9 by means of a fluid pump which sucks the liquid 3 from the collection vessel 11 placed in the lower part of the device. The height of the inflow of the overflow pipeline 10 fixedly sets the height of level of the liquid 3, whereby the pump power is higher than the outflow for the liquid 3 through the filling element 4. The surplus of the liquid 3 flows through the overflow pipeline 10 to the collection vessel 11 where the liquid 3 from the sink 12 flows, too. The liquid 3 in this example is demineralized water supplied by the additives against its biological degradation. The storage vessel 9 has a cover against dust and impurities; the cover also prevents the liquid 3 from evaporating. The losses caused by the evaporation of the liquid 3 during the filling, production of a line 2 and outpouring to the sink 12 are replaced by the personnel according to need, which is determined by view of the level of the liquid in the collection vessel 11.

The height position of the filling element 4 relative to the height of the liquid 3 in the storage vessel 9 is stable and ensures constant hydrostatic pressure of the liquid 3 in the outflow. In order to ensure the constant density of the liquid 3 a regulated heating body is placed in the storage vessel 9; the heating body keeps the temperature of the liquid 3 constant even if the environment's temperature fluctuates.

The filling element 4 involves two outlet nozzles, where each is equipped by the valve 8 which discharges (leaves partially) the liquid 3 flow from the storage vessel 9 for an exactly set time, with margin of error being one ten-thousandth of a second. The pipeline connecting the storage vessel 9 with the filling element 4 is predimensioned so that the discharge of the liquid 3 during the filling of the vessel 1 is accompanied by low flow speed in the pipeline and therefore there are no dynamic phenomena at the beginning and end of the outflow of the liquid 3 which could affect the precision of measuring of the volume of the liquid 3. Despite the relatively small outflow amount and flow of the liquid 3 in the outlet nozzle, the supply pipe has a dimension of at least 25.4 mm (1"). The cross-section of the supply pipe is thus 25 times larger than the cross-section of the outlet nozzle.

The support frame 14 of the device is placed in the bearings on the rotational table which is a positioning tool 7 for gradual placement of the vessels 1 to the required position. The rotational table has circular embeddings into which personnel or robotized manipulator inserts the vessels 1. The embedding has a cross-section which allows inserting highest expected stem or bottom of the vessel 1. In this example each embedding has a hole thanks to which it is possible to produce a certification mark or other similar mark expressing the precision or adequacy of the produced volume line to the standards or legal rules on the stem or the bottom of the vessel 1. This allows marking all necessary labels on the vessel 1 in a single step from below and from the side by means of two elements. The height of the rotational table is stable so that the height of the liquid's 3 level in the vessel 1 after the filling remains in a reference height during the production of the line 2.

Two outlet nozzles of the filling element 4 are placed above the rotational table, whereby its positioning is controlled in such a way that the rotational table stops with the vessels 1 exactly under the mouths of the outlet nozzles. The device with two outlet nozzles can be realized even with a single outlet nozzle; in such case the rotational table between individual stages rotates for one position only, that is, angle which corresponds to the angular pitch of the neighboring embeddings in the rotational table.

Above the rotational table the measuring instrument 5 to measure the level 3 in the vessel 1 is placed. The measuring instrument 5, or pair of them, is placed in a position which corresponds to the rotation of the positioning tool 7 by one position following the position for filling of the vessel 1. The rotation of the rotational table is controlled electronically so that the smooth rotation of the table without jolts and shocks takes place; this leads to faster stabilization of the liquid 3 in the vessel 1. Despite this the liquid 3 in the measuring position can move, which is taken into account by the algorithm during the assessment, which takes into account the fluctuating value of the measured distance from the liquid 3 and which is capable of assessing what would the distance of the level be after stabilization. Thanks to this the temporal interval between rotations of the rotational table can be diminished and productivity is increased.

After measuring and assessing the distances between the measuring instrument 5 and liquid's level 3 in the vessel 1 the value of the distance is transferred to the control center 15 which given the known and stable reference height of the rotational table sends the instruction for the height positioning of the lines production element 6.

The lines production element 6 in this case is a laser marking device which is capable of burning into the surface of the glass the programmed image, in this case a straight line 2, a numerical datum and a volume unit pursuant to respective norm, for the marking of the material volume line. The lines 2 production element 6 is placed from the side above the level of the rotational table in the vertical guiding. The accessory of the lines production element 6 in this case is a shade protecting the personnel and environment against the effects of the laser beam. The shade can be stable; in this example the shade is moved from up to below after the stopping of the vessel 1 in the position to produce line 2. After the production of the line 2 and before the rotation of the rotational table the shade is pulled up so that it does not obstruct the movement of the vessel 1.

The head of the laser marking device has horizontal axis. If the vessel 1 in the place to produce lines 2 has sloped wall, the line 2 is deformed. To compensate the deformation, the laser marking device receives an instruction to produce a curved line. The line is curved downward or upward pursuant to the slope of the wall, whether the level 1 narrows or broadens. The level of curve is dependent on the size of deviation of the wall of the vessel 1 from the vertical line. During the marking of the curved line on the sloped surface the spatial relation between laser head and surface produces a straight line 2.

In order to compensate the repeating inaccuracies, the control center 15 has a program which allows to manually insert the correction which expresses the height shift of the lines 2 production element 6 against the value calculated by the device. The process is the following: the device starts the operation, at least one vessel 1, preferably multiple vessels 1, are withdrawn with the volume line marked and the precision of the marked volume is measured by a metrologically correct and independent way. The imprecision in volume thereby detected will be calculated for a given surface of the liquid 3 in the vessel 1 into a height correction which is inserted into the control center 15, and the height of the lines 2 producing element 6 is corrected by a given amount in further process. Later the independent measuring of the volume can be repeated and correction can be verified or adjusted.

In order to ensure the prescribed focal distance between the laser head and the surface of the vessel 1 the vessels 1 are placed onto the positioning tool 7 in required distance; in case of rotational table according to this example it is the required distance from the middle of the rotational table. This can be ensured by the position of the embedding in the rotational table which is, however, not flexible enough given varying diameters of the stem or bottom of the vessel 1. At the same time such positioning is affected by the shape irregularities between the stem or the bottom of the vessel 1, respectively, and a place where the line 2 is to be marked. A solution proved to be suitable where the positioning of the vessel 1 is realized in relation to the place where the marking of the line 1 is expected. For this purpose, the device in the example has a tool 13 which involves the slidable strip placed from the outer side of the rotational table. The tool 13 is placed in the position which is designed for placement of the vessels 1 on the rotational table. The strip of the tool 13 is slidably adjustable to reach various distances from the middle of the rotational table, whereby it is also height adjustable into the position corresponding to the expected place of the production of the line 2. The personnel or the manipulator places the vessel 1 into embedding in the rotational table, whereby the vessel 1 with its outer circumference touches the strip which defines the exact distance of the place of the production of the line 2 from the middle of the rotational table. This distance is maintained even after gradual rotation of the rotational table into the position of the production of the lines 2, where in this distance the laser marking device is focused on the surface of the vessel 1. In order the tool 13 not to obstruct the movement of the vessel 1 during the rotation of the rotational table the strip is after the placement of the vessel 1 pneumatically moved out of the circumference of the rotational table; the height position of the strip is maintained. The strip in this example involves lateral guiding thumbs whose position with the screws is set and ensured to achieve correct position of the vessel 1 with the circular ground plan.

Below the table the second laser marking device is placed; its head is located in such a way that through the opening in the rotation table it marks a gauge mark or other similar mark onto the bottom of the vessel 1, or the stem of the vessel 1, respectively.

The device in this example has a sensor bar which stops the operation of the device in case the personnel interferes into the dangerous zone by body, for example by hands.

The vessel 1 is placed into the embedding in the rotational table; according to figures 3 to 5 it is a glass with a stem. The glass is within embedding moved in such a way that the wall of the glass touches the tool 13. The strip is subsequently pushed by rectilinear pneumatic motor in the direction out of the rotational table and the rotational table is rotated in such a way that the glass is in the position for filling. The filling element 4 pours the liquid 3 into the glass by means of a valve 8. The rotational table moves the glass into the position for measuring, where the instrument 5 for measuring the level of the liquid measures the distance of the level in the glass. From the measured changing course of the value of the distance the mean distance is calculated, which corresponds to the final value after the movement of the liquid 3 ceases. This value together with the manually inserted height correction in the control center 15 is used to set the height position of the lines 2 production element 6. The glass is moved to the position to produce lines 2, where the mechanical shade is first lifted and then rolled back down; the shade protects the environment from the effects of the laser radiation. When the shade is down the line 2 is produced in the required height and certification mark is marked, too. Subsequently the shade is lifted; the glass is moved into the position where the personnel or the manipulator lifts it and pours the liquid 3 out of it to the sink 12. The rest of the liquid 3 is blown out of the glass by use of the pressed air and the glass is placed outside the device. The device is capable of processing thousands of glasses during a single shift.

### Example 2

In this example the main processes are the same as in previous example; the construction of the device is different, where instead of the rotational table which rotates the vessels 1 into necessary positions the rail guiding is used, on which the vessels 1 with the poured liquid 3 stand, and alongside them on the rail guiding the filling element 4, the measuring instrument 5 and lines 2 production element 6 move.

### Industrial applicability

Industrial applicability is obvious. According to this invention it is possible to repeatedly mark the volume line of the vessels, mainly glasses, whereby high productivity and precision of the produced line is achieved. The method and device take into consideration the actual shape of the vessel; the height of the marked line is individualized for each vessel.

### List of related symbols

1- vessel
2- line
3- liquid
4- filling element
5- measuring instrument for measuring the level of the liquid
6- lines production element
7- positioning tool
8- valve
9- storage vessel
10- overflow pipeline
11- collection vessel
12- sink
13- tool
14- support frame
15- control center

## Claims

1. A method of marking of a volume line of a vessel, particularly a glass, during which a line (2) defining a level of a marked volume of a liquid in a vessel (1) is produced in a transparent and/or translucent wall of the vessel (1), where the line (2) is visible to a naked eye, wherein
a volume of a liquid (3) corresponding to the volume to be marked is poured to the vessel (1), the level of the liquid (3) in the vessel (1) is then contactlessly measured; an element (6) for a production of the lines (2) is set in the height which corresponds to the measured level of the liquid (3) in the vessel (1); the line (2) is produced on the wall of the vessel (1); the liquid (3) is subsequently poured out of the vessel (1),
**characterized in that** during measuring of the height of the level of the liquid (3) in the vessel (1) values of a changing distance of the unstable level of the liquid (3) are measured; from the fluctuating value of the measured distance from the liquid (3) the distance of the level that would be after stabilization is calculated.

2. The method according to claim 1, further **characterized in that** the vessel (1) gradually enters into three main positions in which a filling with the liquid (3), a measuring of the level of the liquid (3), and the production of the line (2) take place, where a relative movement between the vessel (1) and a filling element (4), between the vessel and an instrument (5) for measuring the level of the liquid (3), and between the vessel (1) and the element (6) for production of the lines (2), is ensured.

3. The method according to claim 1 or 2, further **characterized in that** the vessel (1) is in a stable position and the filling element (4) and/or the instrument (5) for measuring of the level of the liquid (3) and/or the element (6) for the production of the lines (2) move towards the vessel (1), or the vessel (1) moves by means of a positioning tool (7) towards filling element (4), the instrument (5) for measuring of the level of the liquid (3) and the element (6) for the production of the lines (2).

4. The method according to any of claims 1 to 3, further **characterized in that** the volume of the poured liquid (3) is defined by measurement of a time during which the liquid (3) flows into the vessel (1) at a constant pressure of the liquid (3); the constant pressure of the liquid (3) is maintained as a hydrostatic pressure with a stable level of the liquid (3) in a storage vessel (9), from which the liquid (3) flows through an overflow pipeline (10) into a collection vessel (11), from where it is pumped back into the storage vessel (9); preferably the liquid (3) is heated or cooled in order to maintain a constant temperature.

5. The method according to any of claims 1 to 4, further **characterized in that** at least in case of one vessel (1) an independent measuring verifies a precision of the set volume line; a detected volume deviation is recalculated as a height difference and this difference is inserted into a control center (15) as a correction during a height adjustment of the element (6) for the production of the lines (2).

6. The method according to any of claims 1 to 5, further **characterized in that** the element (6) for the production of the lines (2) is a laser marking device and during the production of the line (2) a mark corresponding to a standard of the marking of the volume line is produced on a bottom or a stem of the vessel (1).

7. The method according to any of claims 1 to 6, further **characterized in that** in cases of vessels (1) which lack a place for the production of the line (2) on the vertical wall, the element (6) gets an instruction to produce a line that is a deformed line from the point of view of the outlet of the element (6); the instruction is programmed in such a way that after the consideration of the spatial relation with the wall of vessel (1) the resulting line on the wall of the vessel (1) is straight.

8. The method according to any of claims 3 to 7, further **characterized in that** the vessel (1) is placed in the positioning tool (7) in a position which corresponds to a functional zone of the element (6) for the production of the lines (2) once it enters into proximity with the element (6) for the production of the lines (2); preferably the vessel (1) leans onto a tool (13) once it is put on the positioning tool (7); the tool's (13) position delimits the functional zone of the element (6) for the production of the lines (2).

9. The method according to any of claims 1 to 8, further **characterized in that** after the liquid (3) is poured out of the vessel (1) the liquid (3) returns back to fill another vessel (1); the remnants of the liquid (3) are blown out of the vessel (1) by pressed air, preferably in a space above a sink (12) from which the liquid (3) subsequently flows to a collection vessel (11).

10. A device for marking of a volume line of a vessel, particularly a glass, which comprises a support frame (14), an element (6) for a production of lines (2) on an outer wall of the vessel (1), whereby the element (6) for the production of the lines (2) is height adjustably placed on the support frame (14), and the device also comprises a positioning tool (7), a control center (15), a filling element (4) to fill the vessel (1) with a liquid (3), whereby the filling element (4) is equipped by a device to dose a volume amount of the liquid (3) corresponding to the volume to be marked; and the device comprises a contactless instrument (5) for measuring of a level of the liquid (3); whereby the filling element (4), the instrument (5) for measuring of the level of the liquid (3), and the element (6) for the production of the lines (2) are in this order placed alongside the positioning tool (7) which is configured to achieve a relative movement between the vessel (1) and the filling element (4), the instrument (5) for measuring of the level of the liquid (3), and the element (6) for the production of the lines (2); whereby an output from the instrument (5) for measuring of the level of the liquid (3) is connected to a height setting of the element (6) for the production of the lines (2) through the control center (15), **characterized in that** the device is configured to carry out the method according to claim 1.

11. The device according to claim 10, further **characterized in that** the positioning tool (7) is a rotational table which has shape delimited places for placement of vessels (1), wherein an angular pitch between the shape delimited places corresponds to the angular pitch of the placement of the filling element (4), the instrument (5) for measuring of the level of the liquid (3), and the element (6) for the production of the lines (2); preferably a shape delimited place has a form of an embedding in a body of the rotational table.

12. The device according to claim 10 or 11, further **characterized in that** the filling element (4) involves a storage vessel (9) with the liquid, an overflow pipeline (10), a collection vessel (11), a valve (8), an outlet nozzle, whereby the overflow pipeline (10) connects a level of the liquid (3) in the storage vessel (9) with the collection vessel (11); the outlet nozzle is connected with the storage vessel (9) through the valve (8); whereby the valve (8) is controlled to close after the outpouring of the volume of the liquid (3) corresponding to the volume line; preferably the valve (8) is controlled by a time switch.

13. The device according to any of claims 10 to 12, further **characterized in that** it involves an element to keep a temperature of the liquid (3) stable; preferably the element to keep the temperature stable is placed in a storage vessel (9) and the liquid (3) is a demineralized or distilled water, preferably with additives against a biological degradation.

14. The device according to any of claims 10 to 13, further **characterized in that** the control center (15) has an entry device for insertion of a correction of the height of the production of the line (2) and the control center (15) is connected with the positioning tool (7), the filling element (4), the instrument (5) for measuring of the level of the liquid (3), and the element (6) for the production of the lines (2).

15. The device according to any of claims 12 to 14, further **characterized in that** it has a sink (12) whose outlet is connected with the collection vessel (11); and that it also has a nozzle with pressed air to remove remnants of the liquid (3) from an inside of the vessel (1).

## Patentansprüche

1. Eine Methode der Kennzeichnung des Volumenmaßes eines Gefäßes, vor allem eines Glases, bei der an der transparenten und/oder transluzenten Gefäßwand (1) von der Außenseite mit Hilfe des Elements (6) zur Bildung von Linien (2) eine Linie (2) gebildet wird, die den Flüssigkeitsstand des entsprechenden gekennzeichneten Volumens im Gefäß (1) definiert, wo die Linie (2) mit bloßem Auge visuell wahrnehmbar ist, wobei in das Gefäß (1) die Flüssigkeit (3) mit dem Volumen gegossen wird, das dem gekennzeichneten Volumen entspricht, dann wird kontaktlos die Höhe des Flüssigkeitsstandes (3) im Gefäß (1) gemessen; das Element (6) zur Bildung von Linien (2) wird in die Höhe eingestellt, die der festgestellten Höhe des Flüssigkeitsstandes (3) im Gefäß (1) entspricht; an der Gefäßwand (1) wird eine Linie (2) gebildet; anschließend wird die Flüssigkeit (3) aus dem Gefäß gegossen,
**dadurch gekennzeichnet,**
**dass** beim Messen der Höhe des Flüssigkeitsstandes (3) im Gefäß (1) die Werte der sich ändernden Entfernung des nicht stabilen Flüssigkeitsstandes festgestellt werden; aus dem gemessenen Verlauf dieses Wertes wird der Wert der Entfernung nach der Stabilisierung des Flüssigkeitsstandes berechnet.

2. Die Methode gemäß Anspruch 1, weiter **dadurch gekennzeichnet, dass** das Gefäß (1) allmählich in drei Hauptpositionen gerät, in denen es zum Auffüllen mit der Flüssigkeit (3), zur Messung der Höhe des Flüssigkeitsstandes (3) und zur Bildung der Linie (2) kommt, wobei eine relative Bewegung zwischen dem Gefäß (1) und dem Element (4) zum Auffüllen, zwischen dem Gefäß (1) und der Messeinrichtung (5) des Flüssigkeitsstandes und zwischen dem Gefäß (1) und dem Element (6) zur Bildung von Linien (2) sichergestellt wird.

3. Die Methode gemäß Anspruch 1 oder 2, weiter **dadurch gekennzeichnet, dass** das Gefäß (1) sich in einer stabilen Lage befindet, und zu dem Gefäß werden das Element (4) zum Auffüllen und/oder die Messeinrichtung (5) des Flüssigkeitsstandes und/oder das Element (6) zur Bildung von Linien (2) bewegt, oder das Gefäß (1) wird mit Hilfe des Positionierungsmittels (7) zum Element (4) zum Auffüllen, zur Messeinrichtung (5) des Flüssigkeitsstandes und zum Element (6) zur Bildung von Linien (2) bewegt.

4. Die Methode gemäß den Ansprüchen 1 bis 3, weiter **dadurch gekennzeichnet, dass** das Volumen der einzugießenden Flüssigkeit (3) durch die Messung der Zeit festgestellt wird, während der die Flüssigkeit (3) in das Gefäß (1) beim konstanten Druck der Flüssigkeit (3) fließt, der konstante Druck der Flüssigkeit (3) wird als hydrostatischer Druck bei einem stabilen Flüssigkeitsstand (3) im Vorratsgefäß (9) gehalten, aus dem die Flüssigkeit (3) durch ein Überstromrohr (10) in das Sammelbecken (11) fließt, von welchem sie in das Vorratsgefäß (9) befördert wird; dabei wird die Flüssigkeit (3) zur Aufrechterhaltung der konstanten Temperatur vorteilhaft erwärmt oder gekühlt.

5. Die Methode gemäß einem der Ansprüche 1 bis 4, weiter **dadurch gekennzeichnet, dass** mindestens bei einem Gefäß (1) durch eine unabhängige Messung die Genauigkeit des schon gekennzeichneten Volumenmaßes geprüft wird, wobei die Abweichung des Volumens auf den Höhenunterschied des Flüssigkeitsstandes umgerechnet wird, und in das Steuerungszentrum (15) wird diese Differenz als Korrektur bei der Höheneinstellung des Elements (6) zur Bildung von Linien (2) eingegeben.

6. Die Methode gemäß einem der Ansprüche 1 bis 5, weiter **dadurch gekennzeichnet, dass** das Element (6) zur Bildung von Linien (2) eine Laser-Schreibanlage ist und dass bei der Bildung der Linie (2) auf den Gefäßboden (1) oder auf den Gefäßstiel (1) von unten eine Markierung gebildet wird, die der Norm der Kennzeichnung des Volumenmaßes entspricht.

7. Die Methode gemäß einem der Ansprüche 1 bis 6, weiter **dadurch gekennzeichnet, dass** das Element (6) zur Bildung von Linien (2) bei Gefäßen (1), die in der Stelle der Bildung der Linie (2) über keine senkrechte Wand verfügen, eine Anweisung zur Bildung der Linie erhält, die von der Perspektive der Mündung des Elements (6) eine deformierte Linie ist, wobei die Anweisung so programmiert ist, dass bei der Berücksichtigung des Raumverhältnisses mit der Gefäßwand (1) die gebildete Linie (2) an der Gefäßwand (1) gerade ist.

8. Die Methode gemäß einem der Ansprüche 1 bis 7, weiter **dadurch gekennzeichnet, dass** das Gefäß (1) auf das Positionierungsmittel (7) in der Position platziert wird, die nach der Annäherung an das Element (6) zur Bildung von Linien (2) der Funktionszone des Elements (6) zur Bildung von Linien (2) entspricht, wobei sich das Gefäß (1) beim Platzieren auf das Positionierungsmittel (7) vorteilhaft am Hilfsmittel (13) stützt, dessen Position die Funktionszone des Elements (6) zur Bildung von Linien (2) bestimmt.

9. Die Methode gemäß einem der Ansprüche 1 bis 8, **dadurch gekennzeichnet, dass** nach dem Ausgießen der Flüssigkeit (3) aus dem Gefäß (1) die Flüssigkeit (3) zum Auffüllen weiterer Gefäße zurückkommt (1); die Flüssigkeitsreste (3) aus dem Innenraum des Gefäßes (1) werden mit Pressluft ausgetrieben, vorteilhaft im Raum über dem Ausgussbecken (12), aus dem die Flüssigkeit (3) anschließend in das Sammelbecken (11) fließt.

10. Die Anlage zur Kennzeichnung des Volumenmaßes eines Gefäßes, vor allem eines Glases, die den tragenden Rahmen (14), das Element (6) zur Bildung von Linien (2) an der Außenwand des Gefäßes (1) enthält, wobei das Element (6) zur Bildung von Linien (2) am tragenden Rahmen (14) höhenverstellbar angebracht ist, und die Anlage enthält auch ein Positionierungsmittel (7), ein Steuerungszentrum (15), ein Element (4) zum Auffüllen des Gefäßes (1) mit Flüssigkeit (3); das Element (4) zum Auffüllen ist mit einer Anlage zur Dosierung der Volumenmenge der Flüssigkeit (3) ausgestattet, die dem gekennzeichneten Volumenmaß entspricht; die Anlage enthält auch eine kontaktlose Messeinrichtung (5) des Flüssigkeitsstandes (3); wobei das Element (4) zum Auffüllen, die Messeinrichtung (5) des Flüssigkeitsstandes und das Element (6) zur Bildung von Linien (2) in der angeführten Reihenfolge neben dem Positionierungsmittel (7) angebracht sind, das zur Erreichung der relativen Bewegung zwischen dem Gefäß (1) und dem Element (4) zum Auffüllen, der Messeinrichtung (5) des Flüssigkeitsstandes und dem Element (6) zur Bildung von Linien (2) konstruiert ist; wobei
der Ausgang aus der Messeinrichtung (5) des Flüssigkeitsstandes (3) mit der Höheneinstellung des Elements (6) zur Bildung von Linien (2) durch das Steuerungszentrum (15) verbunden ist, **dadurchgekennzeichnet,** dass die Anlage für die Durchführung der Methode gemäß Anspruch 1 konstruiert ist.

11. Die Anlage gemäß Anspruch 10, weiter **dadurch gekennzeichnet, dass** das Positionierungsmittel (7) ein Drehtisch ist, der über formmäßig abgegrenzte Stellen zur Anbringung von Gefäßen (1) verfügt, wobei der Winkelabstand der formmäßig abgegrenzten Stellen dem Winkelabstand der Position des Elements (4) zum Auffüllen, der Messeinrichtung (5) des Flüssigkeitsstandes und des Elements (6) zur Bildung von Linien (2) entspricht; die formmäßig abgegrenzte Stelle hat vorteilhaft die Form des Einlasses im Drehtischkörper.

12. Die Anlage gemäß Anspruch 10 oder 11, weiter **dadurch gekennzeichnet, dass** das Element (4) zum Auffüllen ein Vorratsgefäß (9) mit Flüssigkeit (3), ein Überstromrohr (10), ein Sammelbecken (11), ein Ventil (8), eine Auslaufdüse enthält, wobei das Überstromrohr den Flüssigkeitsstand (3) im Vorratsgefäß (9) mit dem Sammelbecken (11) verbindet; die Auslaufdüse ist über das Ventil (8) mit dem Vorratsgefäß (9) verbunden, wobei das Ventil (8) zur Schließung nach dem Auffüllen des Flüssigkeitsvolumens (3), das dem Volumenmaß entspricht, gesteuert ist; das Ventil (8) wird vorteilhaft mit einem Zeitschalter gesteuert.

13. Die Anlage gemäß einem der Ansprüche 10 bis 12, weiter **dadurch gekennzeichnet, dass** sie über ein Element zur Aufrechterhaltung der stabilen Flüssigkeitstemperatur (3) verfügt; das Element zur Aufrechterhaltung der stabilen Temperatur ist vorteilhaft im Vorratsgefäß (9) angebracht, und die Flüssigkeit (3) ist demineralisiertes oder destilliertes Wasser, vorteilhaft mit Zusatzmitteln gegen biologische Degradation.

14. Die Anlage gemäß einem der Ansprüche 10 bis 13, weiter **dadurch gekennzeichnet, dass** das Steuerungszentrum (15) über eine Eingangsanlage zur Eingabe der Korrektur der Höhe bei der Bildung der Linie (2) verfügt, und das Steuerungszentrum (15) ist mit dem Positionierungsmittel (7), mit dem Element (4) zum Auffüllen, mit der Messeinrichtung (5) des Flüssigkeitsstandes und mit dem Element (6) zur Bildung von Linien (2) verbunden.

15. Die Anlage gemäß einem der Ansprüche 12 bis 14, weiter **dadurch gekennzeichnet, dass** sie über ein Ausgussbecken (12) verfügt, dessen Auslauf mit dem Sammelbecken (11) verbunden ist, und sie verfügt auch über eine Düse mit Pressluft zur Beseitigung der Flüssigkeitsreste (3) aus dem Innenraum des Sammelbeckens (11).

## Revendications

1. Procédé de marquage d'une mesure de capacité d'un récipient, en particulier d'un bocal en verre, consistant à marquer de l'extérieur, sur une paroi transparente et/ou translucide du récipient, à l'aide d'un élément (6) de traçage de lignes (2), la ligne (2) définissant un niveau du volume de liquide respectif marqué dans le récipient (1), où la ligne (2) est visuellement perceptible à l'œil nu, un liquide (3) dans un volume correspondant au volume marqué étant versé dans un récipient (1), puis le niveau du liquide (3) dans le récipient (1) étant mesuré par jauge sans contact ; l'élément (6) de traçage de lignes étant réglé à la hauteur correspondant à la hauteur détectée du niveau de liquide (3) dans le récipient (1) ; la ligne (2) étant tracée sur la paroi du récipient (1) ; ensuite le liquide (3) étant déversé du récipient,
**caractérisé en ce qu'en** mesurant la hauteur du niveau de liquide (3) dans le récipient (1) on détermine des valeurs d'une distance variable du niveau instable ; la valeur de la distance après la stabilisation du niveau de liquide étant calculé à partir du cours mesuré de ces valeurs.

2. Procédé selon la revendication 1, **caractérisé en ce que** le récipient (1) entre successivement en trois positions principales dans lesquelles sont opérés le remplissage d'un liquide (3), le mesurage de la hauteur du niveau de liquide (3) et le traçage de la ligne (2), le moment où sont assurés le mouvement entre le récipient (1) et l'élément de remplissage (4), entre le récipient (1) et la jauge (5) de niveau, ainsi qu'entre le récipient (1) et l'élément (6) de traçage de lignes.

3. Procédé selon la revendication 1 ou 2, **caractérisé en ce que** le récipient (1) est dans une position stable, l'élément (4) de remplissage et/ou la jauge de niveau (5) et/ou l'élément (6) de traçage de lignes étant approchés dudit récipient, ou le récipient (1) est déplacé moyennant un moyen de positionnement (7) vers l'élément (4) de remplissage, vers la jauge de niveau (5) et vers l'élément (6) de traçage de lignes (2).

4. Procédé selon les revendications 1 à 3, **caractérisé en ce que** le volume du liquide (3) étant versé est déterminée en mesurant le temps pendant lequel le liquide (3) s'écoule dans le récipient (1) à pression constante du liquide (3), pression constante du liquide (3) étant maintenue sous forme de pression hydrostatique à un niveau stable du liquide (3) dans le récipient de stockage (9) duquel le liquide (3) s'écoule à travers le tuyau de trop-plein (10) vers le réservoir de collecte (11), d'où il est transféré dans le récipient de stockage (9), de préférence le fluide (3) étant chauffé ou refroidi pour maintenir une température constante.

5. Procédé selon l'une quelconque des revendications 1 à 4, **caractérisé en ce que** l'exactitude de la mesure de volume déjà marquée est vérifiée par une mesure indépendante pour au moins un récipient (1), l'écart sur volume détecté étant converti en différence de hauteur du niveau et cette différence étant insérée dans le centre de commande (15) comme une correction lors de l'adaptation en hauteur de l'élément (6) pour la création des lignes (2).

6. Procédé selon l'une quelconque des revendications 1 à 5, **caractérisé en ce que** l'élément (6) de traçage de lignes est un dispositif de marquage laser et, en traçant la ligne (2) sur le fond du récipient (1) ou sur la queue du récipient (1), il est marqué un repère conformément à la norme relative au marquage de la mesure de capacité.

7. Procédé selon l'une quelconque des revendications 1 à 6, **caractérisé en ce que** l'élément (6) de traçage de lignes (6) sur les récipients (1) n'ayant pas de paroi verticale au point de création de la ligne (2) reçoit la commande de tracer une ligne constituant une ligne déformée par rapport à l'embouchure de l'élément (6), la commande étant programmée de telle sorte que, compte tenu de la relation spatiale avec la paroi du récipient (1), la ligne résultante (2) sur la paroi du récipient (1) soit droite.

8. Procédé selon l'une quelconque des revendications 1 à 7, **caractérisé en ce que** le récipient (1) est placé sur le moyen de positionnement (7) dans une position qui, une fois amenée à proximité de l'élément (6) de traçage de lignes, correspond à une zone fonctionnelle de l'élément (6) de traçage de lignes, de préférence le récipient (1) reposant, lorsqu'il est placé sur le moyen de positionnement (7), sur un accessoire (13) dont la position détermine la zone fonctionnelle de l'élément (6) de traçage de lignes.

9. Procédé selon l'une quelconque des revendications 1 à 8, **caractérisé en ce qu** 'après avoir versé le liquide (3) du récipient (1), le liquide (3) est renvoyé pour remplir d'autres récipients (1), le liquide restant (3) étant expulsé de l'intérieur du récipient (1) à l'aide d'air comprimé, de préférence dans l'espace au-dessus de l'évier (12) d'où le liquide (3) s'écoule ensuite dans le réservoir de collecte (11).

10. Dispositif pour marquer la mesure de capacité du récipient, en particulier du bocal en verre, comprenant un cadre de support (14), un élément (6) de traçage de lignes (6) sur la paroi extérieure du récipient (1), dans lequel l'élément (6) de traçage de lignes est positionnable en hauteur et situé sur le cadre de support (14) et le dispositif comprend également un moyen de positionnement (7), un centre de commande (15), un élément (4) de remplissage de récipient (1) en liquide (3), l'élément de remplissage (4) étant pourvu d'un dispositif de dosage de la quantité volumique du fluide (3) correspondant à la mesure de capacité en cours de marquage ; et le dispositif comprend également une jauge (5) de niveau de fluide (5) sans contact ; dans lequel l'élément de remplissage (4), la jauge de niveau (5) et l'élément de traçage de lignes (6) sont disposés, respectivement, à côté d'un moyen de positionnement (7) qui est adapté pour réaliser un mouvement relatif entre le récipient (1) et l'élément (4) de remplissage, une jauge (5) de niveau et un élément (6) de traçage de lignes (2) ; tandis que
la sortie de la jauge (5) de niveau de liquide est reliée au réglage en hauteur de l'élément (6) de traçage de lignes (2) via le centre de commande (15), **caractérisé en ce que** le dispositif est adapté pour effectuer le procédé selon la revendication 1.

11. Dispositif selon la revendication 10, **caractérisé en ce que** le moyen de positionnement (7) est une table rotative ayant des emplacements, délimités par leur forme, pour le positionnement des récipients (1), l'espacement angulaire de ces emplacements exacts correspondant à l'espacement angulaire de l'élément (4) de remplissage, de la jauge (5) de niveau et de l'élément (6) de traçage de lignes (2), de préférence, l'emplacement délimité par sa forme consiste en un encastrement dans le corps de la table tournante.

12. Dispositif selon la revendication 10 ou 11, **caractérisé en ce que** l'élément de remplissage (4) comprend un récipient de stockage (9) avec du fluide (3), un le tuyau de trop-plein (10), un réservoir collecteur (11), une vanne (8), une buse de sortie, dans lequel le tuyau de trop-plein relie le niveau de fluide (3) dans le récipient de stockage (9) au réservoir de collecte (11), la buse de sortie étant liée via vanne (8) au récipient de stockage (9), la vanne (8) étant commandée pour se fermer après le remplissage du volume de fluide (3) correspondant à la mesure de capacité donnée, de préférence la vanne (8) est commandée par une minuterie.

13. Dispositif selon l'une quelconque des revendications 10 à 12, **caractérisé en ce qu'**il comprend un élément pour maintenir une température stable du fluide (3), de préférence l'élément pour maintenir une température stable étant situé dans un récipient de stockage (9) et le liquide (3) est de l'eau déminéralisée ou distillée, de préférence avec des additifs anti-biodégradation.

14. Dispositif selon l'une quelconque des revendications 10 à 13, **caractérisé en ce que** le centre de commande (15) possède un dispositif d'entrée pour saisir la correction de la hauteur de traçage de ligne (2), le centre de commande (15) étant interconnecté avec le moyen de positionnement (7), l'élément (4) de remplissage, la jauge de niveau (5) et l'élément (6) de traçage de lignes (2).

15. Dispositif selon l'une quelconque des revendications 12 à 14, **caractérisé en ce qu**'il possède un évier (12) dont la sortie est liée à un réservoir de collecte (11) et comporte également une buse d'air comprimé pour éliminer les résidus du liquide (3) de l'intérieur du réservoir de collecte. (11).
